(19) **Europäisches Patentamt**
**European Patent Office**
**Office européen des brevets**

(11) **EP 1 597 123 B1**

(12) **EUROPÄISCHE PATENTSCHRIFT**

(45) Veröffentlichungstag und Bekanntmachung des Hinweises auf die Patenterteilung:
**29.06.2011 Patentblatt 2011/26**

(21) Anmeldenummer: **04713017.4**

(22) Anmeldetag: **20.02.2004**

(51) Int Cl.:
**B60T 8/17** (2006.01)

(86) Internationale Anmeldenummer:
**PCT/EP2004/001669**

(87) Internationale Veröffentlichungsnummer:
**WO 2004/074058 (02.09.2004 Gazette 2004/36)**

(54) **VERFAHREN UND VORRICHTUNG ZUR COMPUTERGESTÜTZTEN BERECHNUNG DER ACHSLASTEN EINES FAHRZEUGS**

METHOD AND DEVICE FOR THE COMPUTER-ASSISTED CALCULATION OF THE AXLE LOAD OF A VEHICLE

PROCEDE ET DISPOSITIF DE CALCUL ASSISTE PAR ORDINATEUR DES CHARGES PAR ESSIEU D'UN VEHICULE

(84) Benannte Vertragsstaaten:
**AT BE BG CH CY CZ DE DK EE ES FI FR GB GR HU IE IT LI LU MC NL PT RO SE SI SK TR**

(30) Priorität: **21.02.2003 DE 10307510**

(43) Veröffentlichungstag der Anmeldung:
**23.11.2005 Patentblatt 2005/47**

(73) Patentinhaber: **KNORR-BREMSE Systeme für Nutzfahrzeuge GmbH**
**80809 München (DE)**

(72) Erfinder:
• **HECKER, Falk**
  **71706 Markgröningen (DE)**

• **HORN, Matthias**
  **70499 Stuttgart (DE)**
• **GÜCKER, Ulrich**
  **71701 Schwieberdingen (DE)**
• **HUMMEL, Stefan**
  **71191 Stuttgart (DE)**

(74) Vertreter: **Schönmann, Kurt**
**Knorr-Bremse,**
**Moosacher Strasse 80**
**80809 München (DE)**

(56) Entgegenhaltungen:
**DE-A- 19 603 430    US-A1- 2002 157 746**
**US-B2- 6 473 682**

**Beschreibung**

Stand der Technik

Die Erfindung geht aus von einem Verfahren und einer Vorrichtung zur computergestützten Berechnung der Achslasten eines Fahrzeugs, insbesondere eines Nutzfahrzeugs gemäß dem Oberbegriff von Anspruch 1 und Anspruch 3.

Elektronische Fahrstabilitätsprogramme von Nutzfahrzeugen benötigen als Eingangsgrößen die Achslasten, insbesondere die der Hinterachse. Die Achslasten werden bisher über Achslastsensoren gemessen, beispielsweise durch einen Luftfederbalg-Drucksensor zur Messung des Federbalgdrucks bei einer Luftfederung oder durch einen Wegsensor zur Messung des Einfederweges bei einer Stahlfederung.

Gemäß der DE 196 03 430 A1 werden die Achslasten mit Daten ermittelt, die von Sensoren, insbesondere von Gierratensensoren geliefert werden. In der US 2002/0157746 A1 wird ein Fahrzeugreifen mit einem integrierten Messelement zum Messen der auf den Reifen wirkenden Kräfte beschrieben. Die US 6,473,682 B2 offenbart ein Verfahren, bei dem die Achslasten aus dem Fahrzeuggewicht und der Längsbeschleunigung berechnet werden.

Alternativ können die Achslasten auch indirekt aus anderen Größen bestimmt bzw. abgeschätzt werden. Bei einigen elektronischen Bremssystemen von Nutzfahrzeugen basiert die Bremskraftverteilung auf die Achsen auf einer Differenzschlupfbetrachtung. Ein Differenzschlupfregler zur Regelung des Differenzschlupfes zwischen den Achsen während des Bremsens dient dazu, die Abbremsung der einzelnen Achsen zu harmonisieren. Aus dem Differenzschlupf und der Bremsverstärkung lassen sich dann die Achslasten unter der Voraussetzung berechnen, dass die Bremsenkennwerte wie Reibwerte der Bremsbeläge und der Bremsscheiben bekannt sind. Diese Art der Berechnung der Achslasten weist allerdings einige Nachteile auf :

- Die Achslasten sind erst nach einer hinreichenden Anzahl auswertbarer Bremsungen berechenbar.

- In die berechneten Achslasten gehen ungenaue und lediglich geschätzte Werte über die Bremsenkennwerte ein, welche aber einen maßgeblichen Einfluss auf das Berechnungsergebnis ausüben.

- Die Bremskraftverteilung beinhaltet stets die dynamische Achslastverteilung, die jedoch in nichtlinearer Weise vom Umfang der Bremsung abhängt. Das erhöht die Ungenauigkeit der daraus berechneten Achslasten weiter.

Der vorliegenden Erfindung liegt demgegenüber die Aufgabe zugrunde, ein Verfahren und eine Vorrichtung der eingangs erwähnten Art derart weiter zu entwickeln, dass die Achslasten eines Fahrzeugs einfacher und genauer berechnet bzw. abgeschätzt werden können. Erfindungsgemäß wird diese Aufgabe durch die kennzeichnenden Merkmale der Patentansprüche 1 und 3 gelöst.

Physikalische Grundlage der Erfindung bildet eine Funktion $f(\lambda) = \mu = F_x/F_z$, die den Zusammenhang zwischen dem Längsschlupf $\lambda$ und dem Verhältnis $\mu$ der Längskraft $F_x$ zur Aufstandskraft $F_z$ an einem Rad beschreibt. Der Erfindungsgedanke besteht darin, aus der aus Motor- und Retardermomenten oder anderen meßbaren Größen bestimmten und an einem Rad wirkenden Längskraft $F_x$ und einem gemessenen Längsschlupf $\lambda$ mit Hilfe der Steigung C der Funktion $f(\lambda)$ die Aufstandskraft $F_z$ zu berechnen. Aus der Aufstandskraft $F_z$ kann dann die Achslast berechnet werden. Hierzu ist die Kenntnis der Steigung C der Funktion $f(\lambda)$ im betrachteten Betriebspunkt notwendig, welche beispielsweise aus Fahrversuchen ermittelt und für das erfindungsgemäße Verfahren vorgegeben wird.

Das neu vorgestellte Verfahren nutzt für die Berechnung der Achslasten eines Fahrzeugs in vorteilhafter Weise Signale von bereits im Rahmen von Fahrstabilitätssystemen oder Antiblockiersystemen ohnehin vorhandenen Sensoren, beispielsweise von Radgeschwindigkeits- und Motormomentsensoren, so dass keine weitere Sensorik notwendig ist. Darüber hinaus sind für die Ausführung des Verfahrens keine vorangehenden Bremsmanöver notwendig, vielmehr erfolgt die Masseberechnung während des normalen Fahrbetriebs.

Durch Versuche wurde herausgefunden, dass unter üblichen Fahrbedingungen, d.h. für kleine Werte von $\lambda$ eine lineare Beziehung zwischen dem Längsschlupf $\lambda$ und dem Kraftverhältnis $\mu = F_x/F_z$ besteht. Für die Berechnung der Achslasten gemäß dem hier vorgestellten Verfahren wird vorzugsweise folglich von einer konstanten Steigung C der Funktion $f(\lambda)$ ausgegangen, so dass das Kraftverhältnis $\mu = F_x/F_z$ lediglich durch einfache Multiplikation des Längsschlupfes $\lambda$ mit der konstanten Steigung C bestimmt werden kann. Dann gilt:

$$F_z = \frac{F_x}{\lambda \cdot C}$$

**EP 1 597 123 B1**

Aus der Aufstandskraft $F_z$ kann die Achslast m dann aus der Beziehung $F_z = m\,g$ berechnet werden.

Gemäß einer besonders bevorzugten Ausführungsform der Erfindung erfolgt die Berechnung der Achslasten auf der Basis der oben genannten Funktion $f(\lambda)$ für Werte des Längsschlupfes $\lambda$ kleiner als 8%. In diesem Bereich ist gewährleistet, dass die Steigung C der Funktion $f(\lambda)$ konstant ist.

Die Steigung C der Funktion $f(\lambda)$ ist unter anderem abhängig von den Reibverhältnissen zwischen den Reifen und der Fahrbahn. Für die Achslastberechnung kann einerseits von idealen, d.h. hohen Reibwerten ausgegangen werden, woraus sich eine maximale Steigung C und folglich berechnete Achslasten ergeben, welche kleiner oder gleich den tatsächlichen Achslasten sind. Ein auf der Basis dieser berechneten Achslasten operierendes Fahrstabilitätssystem würde folglich eher von zu geringen Achslasten ausgehen und dementsprechend später oder schwächer eingreifen. Alternativ kann auch von ungünstigen, d.h. niedrigen Reibwerten ausgegangen werden, was einer minimalen Steigung C der Funktion $f(\lambda)$ entspricht und berechnete Achslasten ergibt, die größer oder gleich den tatsächlichen sind. Darüber hinaus kann durch die beiden Extremwerte ein Bereich für die berechneten Achslasten angegeben werden, wobei die tatsächlichen Achslasten innerhalb dieses Bereiches liegen und das Ergebnis durch Plausibilitätsprüfungen weiter eingeschränkt werden kann.

Zeichnung

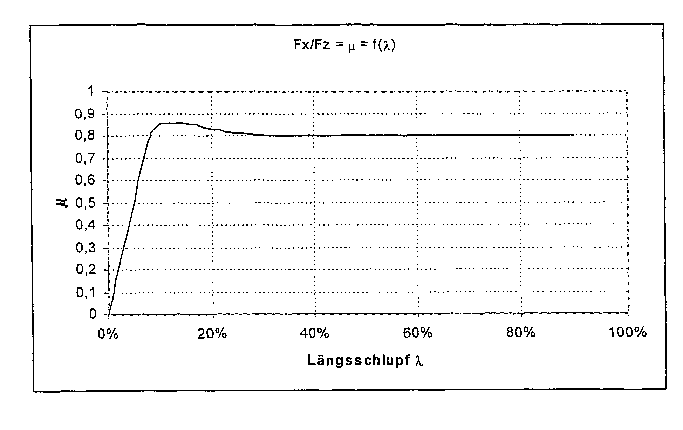

Ein Ausführungsbeispiel der Erfindung ist in der Zeichnung dargestellt und in der nachfolgenden Beschreibung näher erläutert. In der Zeichnung zeigt die einzige Figur den graphischen Verlauf der Funktion $f(\lambda) = \mu = F_x/F_z$, die den Zusammenhang zwischen dem Längsschlupf $\lambda$ und dem Verhältnis $\mu$ der Längskraft $F_x$ zur Aufstandskraft $F_z$ an einem Rad beschreibt.

Beschreibung eines Ausführungsbeispiels

Gemäß einer bevorzugten Ausführungsform wird das erfindungsgemäße Verfahren zur Berechnung der Achslasten der angetriebenen Hinterachse eines Nutzfahrzeugs angewendet, insbesondere an einer Sattelzugmaschine mit zwei Achsen, von welchen nur die hintere Achse angetrieben ist. An jeder Achse sind Sensoren angeordnet, welche die Geschwindigkeit der Räder der jeweiligen Achse sensieren und an ein Steuergerät weiterleiten. Bei diesen Sensoren handelt es sich beispielsweise um Sensoren, welche im Rahmen von fahrzeugbezogenen Regelsystemen, beispielsweise Fahrstabilitätsregelsystemen oder Antiblockiersystemen, bereits vorhanden sind.

Es wird vorausgesetzt, dass die Radgeschwindigkeiten an einer Achse ohne Differenzschlupf mit einer nur sehr geringen Toleranz gleich groß sind, was beispielsweise durch einen hochgenauen Reifentoleranzabgleich realisierbar ist. Zu geeigneten Zeitpunkten, d.h. wenn die nicht angetriebene Vorderachse keine Längs- oder Querkräfte überträgt, d.h. wenn kein Bremsdruck in den Radbremszylindern ansteht und das Fahrzeug geradeaus fährt, wird zunächst der Differenzschlupf $\lambda$ zwischen Vorder- und Hinterachse durch eine Berechnungseinheit des Steuergeräts berechnet :

$$\lambda = \frac{v_{HA} - v_{VA}}{v_{VA}} \qquad (1)$$

mit
$V_{VA}$ = mittlere Geschwindigkeit der Vorderräder,
$V_{HA}$ = mittlere Geschwindigkeit der Hinterräder.

Die Längskraft $F_x$ an den Rädern der angetriebenen Hinterachse wird dann wie folgt berechnet:

$$F_X = \frac{\sum M_x \cdot \omega_x}{v_{HA}} \qquad (2)$$

wobei
$M_x$ die abgegebenen Momente von auf die Antriebsräder wirkenden Aggregaten,
$\omega_x$ die Winkelgeschwindigkeiten von auf die Antriebsräder wirkenden Aggregaten,

$v_{HA}$ die mittlere Geschwindigkeit der Hinterräder ist.

Im Falle des Vorhandenseins eines Retarders gilt beispielsweise :

$$M_x \cdot \omega_x = M_{Motor} \cdot \omega_{Motor} + M_{Retarder} \cdot \omega_{Retarder} \qquad (3)$$

wobei die Momente $M_{Retarder}$ und $M_{Motor}$ in der Regel gegenläufige Vorzeichen aufweisen.

Die Funktion $f(\lambda) = \mu = F_x/F_z$ beschreibt den Zusammenhang zwischen dem Längsschlupf $\lambda$ und dem Verhältnis $\mu$ der Längskraft $F_x$ zur Aufstandskraft $F_z$ an einem vorzugsweise angetriebenen Rad und ist in der Figur beispielhaft dargestellt. Wie aus der Figur hervorgeht, ist der Kurvenverlauf für kleine Schlupfwerte von 0% bis ca. 8% annähernd linear und dort folglich die Steigung C der Funktion $f(\lambda)$ konstant. Die Steigung C der Kurve wird vorzugsweise aus Fahrversuchen ermittelt und wird bei der nachfolgenden Berechnung der Achslasten als vorgegebene Eingangsgröße zugrunde gelegt.

Aus der vorgegebenen Steigung C des linearen Bereichs der Funktion $f(\lambda)$, der gemäß Gleichung (2) berechneten Längskraft $F_x$ sowie dem anhand Gleichung (1) bestimmten Längsschlupf $\lambda$ wird anschließend die Aufstandskraft $F_z$ an einem angetriebenen Rad der Hinterachse nach folgender Vorschrift berechnet :

$$F_z = \frac{F_x}{\lambda \cdot C} \qquad (4)$$

Aus der Aufstandskraft $F_z$ kann dann schließlich die Achslast m wie folgt berechnet werden :

$$m = \frac{F_z}{g} \qquad (5)$$

wobei g die Erdbeschleunigung ist.

Die Genauigkeit der berechneten bzw. geschätzten Achslasten hängt im wesentlichen von der Genauigkeit der gemessenen Eingangsgrößen ab, die jedoch im allgemeinen hinreichend genau verfügbar sind. Gegen stochastische Fehler in den Eingangssignalen können geeignete Mittelwertbilder oder Filter verwendet werden.

Um die Berechnungen des erfindungsgemäßen Verfahrens ausführen zu können, ist eine Berechnungseinheit beispielsweise in Form eines Mikrocomputers vorgesehen, welche beispielsweise in ein vorhandenes Steuergerät eines elektropneumatischen Bremssystems des Nutzfahrzeugs integriert ist.

**Patentansprüche**

1.   Verfahren zur computergestützten Berechnung der Achslasten eines Fahrzeugs, insbesondere eines Nutzfahrzeugs, **dadurch gekennzeichnet, dass** die Achslasten auf der Basis einer Funktion $f(\lambda)$ berechnet werden, welche die Abhängigkeit des Verhältnisses der Längskraft $F_x$ zur Aufstandskraft $F_z$ an einem Rad vom Längsschlupf $\lambda$ beschreibt, wobei

a) die Achslasten in einem Bereich der Funktion $f(\lambda)$ berechnet werden, in welchem diese Funktion $f(\lambda)$ annähernd linear ist, wobei die Steigung C der Funktion $f(\lambda)$ vorgegeben wird, und

b) der Verlauf der Funktion $f(\lambda)$ für Werte des Längsschlupfes von kleiner als 8 % herangezogen wird, und

c) der Längsschlupf $\lambda$ als Differenzschlupf zwischen den Rädern einer angetriebenen Achse und den Rädern einer nicht angetriebenen Achse bestimmt wird, wobei

d) die Längskraft $F_x$ gemessen oder aus auf das angetriebene Rad wirkenden Drehmomenten M berechnet wird.

2.   Verfahren nach Anspruch 1, **dadurch gekennzeichnet, dass** die annähernd konstante Steigung C der Funktion $f(\lambda)$ zuvor durch Versuche ermittelt wird.

3. Vorrichtung zur Ausführung des Verfahrens nach Anspruch 1, **dadurch gekennzeichnet, dass** sie eine Berechnungseinheit aufweist, welche derart ausgebildet ist, dass sie die Achslasten auf der Basis einer Funktion f($\lambda$) berechnet, welche die Abhängigkeit des Verhältnisses der Längskraft $F_x$ zur Aufstandskraft $F_z$ an einem Rad vom Längsschlupf $\lambda$ beschreibt.

4. Vorrichtung nach Anspruch 3, **dadurch gekennzeichnet, dass** die Berechnungseinheit derart ausgebildet ist, dass sie die Achslasten in einem Bereich der Funktion f($\lambda$) berechnet, in welchem diese Funktion f($\lambda$) annähernd linear ist, wobei die Steigung C der Funktion f($\lambda$) vorgegeben wird.

5. Vorrichtung nach Anspruch 3 oder 4, **dadurch gekennzeichnet, dass** sie Sensoren zur direkten oder indirekten Messung der Radgeschwindigkeit und/oder der an dem Rad wirkenden Kräfte oder Momente umfasst.

**Claims**

1. Method of computer-assisted computation of the axle loads of a vehicle, in particular a commercial vehicle, **characterized in that** the axle loads are computed on the basis of a function f(A) that is descriptive of the dependence of the ratio of the longitudinal force $F_x$ to the contact force $F_z$ on a wheel on the slip $\lambda$ along the longitudinal direction, wherein

(a) the axle loads are computed in a sphere of the function f($\lambda$) in which this function f(A) is approximately linear, with the slope C of the function f(A) being predetermined, and
(b) the form of the function f(A) is referred to for values of the slip in the longitudinal direction of less than 8 %, and
(c) the slip $\lambda$ along the longitudinal direction is determined between the wheels of a driven axle and the wheels of a non-driven axle, wherein
(d) the longitudinal force $F_x$ is measured or computed from the torques M acting upon the driven wheel.

2. Method according to Claim 1, **characterized in that** said approximately constant slope C of the function f($\lambda$) is determined before by trial.

3. Device for performing the method according to Claim 1, **characterized in that** it comprises a computing unit that is so configured that it computes the axle loads on the basis of a function f($\lambda$) that is descriptive of the dependence of the ratio of the longitudinal force $F_x$ to the contact force $F_z$ on a wheel on the slip $\lambda$ along the longitudinal direction.

4. Device according to Claim 3, **characterized in that** said computing unit is so configured that it computes the axle loads in a sphere of the function f($\lambda$) in which this function f($\lambda$) is approximately linear, with the slope C of the function f(A) being predetermined.

5. Device according to Claim 3 or 4, **characterized in that** it comprises sensors for the direct or indirect measurement of the wheel speed and/or of the forces or momentums acting upon the wheel.

**Revendications**

1. Procédé de calcul assisté par ordinateur des charges par essieu d'un véhicule, en particulier d'un véhicule utilitaire, **caractérisé en ce que** les charges par essieu sont évaluées sur la base d'une fonction f($\lambda$) descriptive de la dépendance du rapport entre la force longitudinale $F_x$ et la force de contact $F_z$ à une roue du patinage $\lambda$ le long du sens longitudinal, dans lequel

a) les charges par essieu sont évaluées dans une région de la fonction f($\lambda$), dans laquelle cette fonction f($\lambda$) est linéaire environ, au gradient C de la fonction f($\lambda$) étant prédéterminé, et
b) référence se fait la forme de la fonction f($\lambda$) en ce qui concerne les valeurs du patinage le long du sens longitudinal de moins de 8 %, et
c) le patinage $\lambda$ le long du sens longitudinal est établi entre les roues d'un essieu entraîné et les roues d'un essieu non entrainé, dans lequel
d) la force longitudinale $F_x$ est mesurée ou évaluée à partir des moments de couple M agissant sur la roue entraînée.

**2.** Procédé selon la revendication 1, **caractérisé en ce que** le gradient C constant environ de la fonction f($\lambda$) est déterminé par essai en avant.

**3.** Dispositif à réaliser le procédé selon la revendication 1, **caractérisé en ce qu'**il comprend une unité calculatrice, qui est configurée de façon, qu'elle évalue les charges par essieu sur la base d'une fonction f($\lambda$) descriptive de la dépendance du rapport entre la force longitudinale $F_x$ et la force de contact $F_z$ à une roue du patinage $\lambda$ le long du sens longitudinal.

**4.** Dispositif selon la revendication 3, **caractérisé en ce que** ladite unité calculatrice set configurée d'une telle façon, qu'elle évalue les charges par essieu dans une région de la fonction f($\lambda$), dans laquelle cette fonction f($\lambda$) est linéaire environ, au gradient C de la fonction f($\lambda$) étant prédéterminé.

**5.** Dispositif selon la revendication 3 ou 4, **caractérisé en ce qu'**il comprend des détecteurs pour la mesure directe ou indirecte de la vitesse de la roue et/ou des efforts ou moments, qui agissent sur la roue.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19603430 A1
- US 20020157746 A1
- US 6473682 B2